# EUROPÄISCHE PATENTSCHRIFT

(11) **EP 3 541 524 B1**
(45) Veröffentlichungstag und Bekanntmachung des Hinweises auf die Patenterteilung: **28.02.2024**
(21) Anmeldenummer: 17838118.2
(22) Anmeldetag: 14.11.2017
(51) Int. Cl.: B02C 18/14, B02C 18/18

(54) **SCHERAGGREGAT ZUR GEWINNUNG VON GLUTEN AUS EINEM STÄRKE- UND GLUTENHALTIGEN GEMISCH**
CUTTING UNIT FOR RECOVERING GLUTEN FROM A MIXTURE CONTAINING STARCH AND GLUTEN
ENSEMBLE DE CISAILLEMENT PERMETTANT D'OBTENIR DU GLUTEN À PARTIR D'UN MÉLANGE CONTENANT DE L'AMIDON ET DU GLUTEN

(30) Priorität: 16.11.2016 DE 102016013689
(43) Veröffentlichungstag der Anmeldung: 25.09.2019
(73) Patentinhaber: NETZSCH Pumpen & Systeme GmbH, 95100 Selb (DE)
(72) Erfinder: WEIGL, Stefan, 84453 Mühldorf (DE); BRUNNER, Herbert, 84155 Bodenkirchen (DE); DEHNZ, Achim, 83139 Stöchtenau (DE); HINDERA, Dominik, 84543 Winhöring (DE); KNEIDL, Franz, 84478 Waldkraiburg (DE); SCHMITT, Thomas, 84494 Lohkirchen (DE); SCHOEBERL, Stefan, 84428 Buchbach (DE); WEBER, Erwin, 84478 Waldkraiburg (DE); ENGL, Horst, 91154 Roth (DE)
(74) Vertreter: Beyer, Andreas
(86) Internationale Anmeldenummer: PCT/DE2017/000386
(87) Internationale Veröffentlichungsnummer: WO 2018/091008

(56) Entgegenhaltungen:
- EP-A1- 0 454 922
- EP-A1- 1 072 314
- EP-A2- 2 218 507
- WO-A1-2012/016762
- DE-A1- 2 454 236
- DE-A1- 10 325 368

## Beschreibung

Die vorliegende Erfindung betrifft ein Scheraggregat, ein System mit einem Scheraggregat und einer damit verbundenen Pumpeinrichtung sowie ein Verfahren zur Gewinnung von Gluten aus einem stärke- und glutenhaltigen Gemisch.

Das Stoffgemisch Gluten wird in der Lebensmittelindustrie als Streckungsmittel verwendet, da es sein Volumen durch Aufnahme von Wasser um bis zu 150 % vergrößern kann. Gewonnen wird Gluten aus stärke- und glutenhaltigen Gemischen, wie beispielsweise Weizenteig. Hierzu müssen insbesondere Stärke sowie sonstige lösliche Bestandteile aus dem Gemisch ausgewaschen werden. In herkömmlichen industriellen Verfahren zur Glutenherstellung wird das Gemisch in mehreren Stufen mittels Vorrichtungen bearbeitet, die miteinander gekoppelte Agglomeratoren, Zentrifugen und/oder Waschsiebe umfassen. Anschließend wird das gewonnene Gluten zur weiteren Verwendung getrocknet und gemahlen.

Der Gewinnungsprozess beeinflusst durch den Grad der Auswaschung der Stärke und löslichen Bestandteile den Proteinanteil des gewonnenen Glutens, welcher wiederum ausschlaggebend für den späteren Einsatzbereich des Glutens ist. Während Gluten mit einem Proteinanteil von über 75 % im Lebensmittelbereich verwendet werden kann, dient Gluten mit einem Proteinanteil von weniger als 75 % lediglich als Tierfutter. Demnach bestimmt der Proteinanteil des Glutens auch dessen Preis. Grundsätzlich gilt, je höher der Proteinanteil des Glutens, desto hochwertiger und auch teurer ist das Gluten.

Um den Proteinanteil des Glutens im Rahmen seiner Gewinnung zu erhöhen, werden bereits verschiedene Zusatzvorrichtungen in Glutengewinnungsanlagen integriert. Aus der Praxis bekannte Zusatzvorrichtungen basieren auf dem Rotor-Stator-Prinzip, wobei durch ein Zusammenspiel eines Rotors mit einem Stator auf das Gluten eingewirkt wird. Solche Vorrichtungen des Standes der Technik verursachen jedoch hohe Kosten und erzielen lediglich eine geringe Erhöhung des Proteinanteils des Glutens.

Beispielsweise aus DE 24 54 236 A1 ist ein Verfahren zur Gewinnung von Gluten bekannt, bei dem ein Paar in einem Trog angeordneter, rotierend betriebener Schneckengänge, dazu verwendet wird, Teig zu mischen, zu mahlen und zu scheren. Hierdurch wird Gluten von Stärke getrennt.

DE 103 25 368 A1 offenbart eine Vorrichtung zum Zusammendrücken leerer Behälter, wie beispielsweise Getränkeflaschen oder Dosen, die ein Gehäuse mit eine Einfüllöffnung umfasst, in die die leeren Behälter eingelegt bzw. geschüttet oder geworfen werden können. Im Gehäuse ist eine Schneid- und Presseinheit angeordnet, die über zwei beabstandet angeordnete Walzen verfügt. Die Walzen sind jeweils mit Abschnitten ausgebildet, die einen vergrößerten Durchmesser aufweisen, und derart angebracht, dass besagte Abschnitte axial zueinander versetzt angeordnet sind und dabei einen Spalt ausbilden, wodurch Schneidscheiben zur Zerkleinerung der leeren Behälter ausgebildet sind.

Des Weiteren ist aus EP 2 218 507 A2 eine Vorrichtung zum Zerkleinern von schüttfähigem Aufgabegut durch Schneiden oder Scherschneiden bekannt. Diese verfügt über ein Gehäuse, in dem zwei Rotoren angeordnet sind. Die Rotoren überlappen radial, sind aber axial versetzt, sodass die überlappenden Abschnitte unter Bildung eines Spalts miteinander kämmen, wodurch Zerkleinerungswerkzeuge gebildet sind.

WO 2012 / 016 762 A1 offenbart einen Zweiwellenzerkleinerer zum Zerkleinern von Feststoffen oder Feststoffen in Flüssigkeiten. Der Zweiwellenzerkleinerer umfasst ein Gehäuse, das einen innenliegenden Zerkleinerungsraum definiert. Die zu zerkleinernden Feststoffe sind dem Zerkleinerungsraum über eine Einlassöffnung zuführbar und können über eine Auslassöffnung abgeführt werden. Ferner umfasst der Zweiwellenzerkleinerer eine drehbar gelagerte erste Welle und eine drehbar gelagerte zweite Welle. Ein erster Messerscheibenblock ist drehfest auf der ersten Welle befestigt und ein zweiter Messerscheibenblock ist drehfest auf der zweiten Welle befestigt. Die Messerscheibenblöcke weisen jeweils eine Vielzahl von Messerscheiben zum Durchführen einer Zerkleinerung der Feststoffe auf.

Es ist daher eine Aufgabe der vorliegenden Erfindung, eine Vorrichtung und ein Verfahren zur Gewinnung von Gluten bereitzustellen, die den Proteinanteil des gewonnenen Glutens erhöhen.

Diese Aufgabe ist erfindungsgemäß durch ein Scheraggregat mit den Merkmalen des Anspruchs 1, ein System mit den Merkmalen des Anspruchs 12 und ein Verfahren mit den Merkmalen des Anspruchs 13 gelöst.

Bevorzugte Ausgestaltungen sind Gegenstand der abhängigen Ansprüche und werden aus der nachfolgenden Beschreibung ersichtlich.

Das erfindungsgemäße Scheraggregat zur Gewinnung von Gluten aus einem stärke- und glutenhaltigen Gemisch umfasst ein Gehäuse, in dem ein Scherraum mit einem Einlass und einem Auslass ausgebildet ist, sowie eine drehbar in dem Gehäuse gelagerte erste Welle, die eine Vielzahl scheibenförmiger erster Scherwerkzeuge aufweist, die drehfest an der ersten Welle angebracht sind, wobei jeweils zwei benachbarte Scherwerkzeuge der Vielzahl erster Scherwerkzeuge axial voneinander beabstandet sind, sodass sie einen Zwischenraum bilden. Das Scheraggregat umfasst ferner eine drehbar In dem Gehäuse gelagerte zweite Welle, die parallel zu der ersten Welle angeordnet ist und die eine Vielzahl scheibenförmiger zweiter Scherwerkzeuge aufweist, die drehfest an der zweiten Welle angebracht sind, wobei jeweils zwei benachbarte Scherwerkzeuge der Vielzahl zweiter Scherwerkzeuge axial voneinander beabstandet sind, sodass sie einen weiteren Zwischenraum bilden. Die ersten und zweiten Scherwerkzeuge sind in dem Scherraum angeordnet, wobei die erste und die zweite Welle radial so voneinander beabstandet sind und die Vielzahl erster Scherwerkzeuge relativ zu der Vielzahl zweiter Scherwerkzeuge axial solchermaßen versetzt ist, dass wenigstens ein Abschnitt eines der Vielzahl zweiter Scherwerkzeuge in einen Zwischenraum eingreift. Zwischen dem wenigstens einen eingreifenden Abschnitt und den beiden benachbarten, den Zwischenraum bildenden ersten Scherwerkzeugen ist in axialer Richtung jeweils ein Spalt einer Breite von mindestens 0,3 mm, vorzugsweise mindestens 0,5 mm ausgebildet.

Mit anderen Worten ist das Scheraggregat eine Zweiwellenmaschine, die dazu eingerichtet ist, im Betrieb Scherbeanspruchungen auf das zu bearbeitende stärke- und glutenhaltige Gemisch aufzubringen, wodurch selbst Gemische mit zäher, teigartiger Konsistenz und auch faserhaltige Gemische bearbeitet werden können. Genauer gesagt werden die Scherbeanspruchungen bei einer Rotation der ersten und/oder zweiten Welle durch ein Zusammenwirken des wenigstens einen eingreifenden Abschnitts, der beiden benachbarten, den Zwischenraum bildenden ersten Scherwerkzeuge und des zwischen diesen ausgebildeten Spalts erzeugt. Der zwischen dem wenigstens einen eingreifenden Abschnitt und den beiden benachbarten, den Zwischenraum bildenden ersten Scherwerkzeugen ausgebildete Spalt verhindert dabei gleichzeitig eine Schneidbeanspruchung des zu bearbeitenden Gemischs.

In einer Weiterbildung des erfindungsgemäßen Scheraggregats kann ferner wenigstens ein Abschnitt eines der Vielzahl erster Scherwerkzeuge in den weiteren Zwischenraum eingreifen. In dieser Weiterbildung ist zwischen dem wenigstens einen eingreifenden Abschnitt eines der Vielzahl erster Scherwerkzeuge und den beiden benachbarten, den weiteren Zwischenraum bildenden zweiten Scherwerkzeugen in axialer Richtung jeweils ein weiterer Spalt einer Breite von mindestens 0,3 mm, vorzugsweise mindestens 0,5 mm ausgebildet. Wie bei dem zuvor beschriebenen Spalt verhindert auch der weitere Spalt bei einem Betrieb des Scheraggregats eine Schneidbeanspruchung des zu bearbeitenden Gemischs. Gleichzeitig erzeugt das Zusammenwirken des wenigstens einen eingreifenden Abschnitts eines der Vielzahl erster Scherwerkzeuge, der beiden benachbarten, den weiteren Zwischenraum bildenden zweiten Scherwerkzeuge und des weiteren Spalts bei einer Rotation der ersten und/oder zweiten Welle Scherbeanspruchungen, die auf das Gemisch einwirken.

Das erfindungsgemäße Scheraggregat kann eine Vielzahl von durch erste und zweite Scherwerkzeuge ausgebildete Zwischenräume und weitere Zwischenräume haben, in die durch eine Rotation der ersten und/oder zweiten Welle temporär verschiedene Abschnitte jeweils zugehöriger zweiter bzw. erster Scherwerkzeuge eingreifen. Entsprechend kann das erfindungsgemäße Scheraggregat auch eine Vielzahl von Spalten aufweisen. Da die ersten und zweiten Scherwerkzeuge gegenseitig ineinander greifen können kann ein Spalt gleichzeitig einem weiteren Spalt entsprechen.

In einer weiteren erfindungsgemäßen Ausführungsform des Scheraggregats kann der Spalt und/oder der weitere Spalt eine axiale Breite von mindestens 1 mm, vorzugsweise von mindestens 2 mm haben. Die genaue axiale Breite des Spalts und/oder des weiteren Spalts kann in Abhängigkeit der strukturellen Ausbildung oder Dimensionen des Scheraggregats und seiner Komponenten und/oder in Abhängigkeit des zu bearbeitenden Gemischs gewählt werden. Über die Wahl der axialen Spaltbreite kann die Intensität der mittels des Scheraggregats erreichbaren Scherbeanspruchung beeinflusst und ein unerwünschtes Schneiden des Gemischs sicher verhindert werden.

Die ersten Scherwerkzeuge und/oder die zweiten Scherwerkzeuge können in einer Weiterbildung der Erfindung sternförmig sein. Darüber hinaus kann an einer Außenumfangsfläche wenigstens eines Sternzackens des ersten Scherwerkzeugs und/oder des zweiten Scherwerkzeugs zumindest abschnittsweise eine Verzahnung ausgebildet sein. Es versteht sich, dass auch sämtliche Außenumfangsflächen mehrerer oder aller Sternzacken des ersten Scherwerkzeugs und/oder des zweiten Scherwerkzeugs eine Verzahnung aufweisen können. Durch ein Ausbilden von Verzahnungen an den Schneidwerkzeugen können die mittels des Scheraggregats auf das Gemisch aufbringbaren Scherbeanspruchungen beeinflusst werden, wobei dadurch insbesondere eine Erhöhung der Scherbeanspruchung erreicht werden kann.

Alternativ zu der vorstehend beschriebenen Ausführungsform können die ersten Scherwerkzeuge und/oder die zweiten Scherwerkzeuge auch eine sonstige, nicht sternförmige geometrische Gestalt mit oder ohne Verzahnungen an der Außenumfangsfläche haben. Beispielsweise können die Scherwerkzeuge einen wellenförmigen Außenumfang mit oder ohne abschnittsweiser Verzahnung aufweisen.

Gemäß einer Weiterbildung der Erfindung kann die Vielzahl erster Scherwerkzeuge und/oder die Vielzahl zweiter Scherwerkzeuge drehfest auf einer Hülse angeordnet sein, wobei die Hülse drehfest mit der zugehörigen ersten und/oder zweiten Welle verbunden ist. Diese Weiterbildung ermöglicht eine einfache Montage und Demontage der Scherwerkzeuge an der zugehörigen Welle, da die Scherwerkzeuge so als gemeinsame Einheit mit der Hülse austauschbar sind. Dies wirkt sich vorteilhaft auf die Wartung, die Reinigung und eine strukturelle Anpassbarkeit des erfindungsgemä-βen Scheraggregats aus.

In einer weiteren Ausführungsform kann die Vielzahl erster Scherwerkzeuge und/oder die Vielzahl zweiter Scherwerkzeuge des erfindungsgemäßen Scheraggregats Innerhalb des Scherraums schraubenlos an der zugehörigen Welle befestigt sein. Dadurch kann der gesamte Scherraum schraubenfrei sein, sodass keine Schrauben oder Schraubenköpfe mit dem zu scherenden Gemisch in Berührung kommen. Dies ist Insbesondere für die Verwendung des gewonnenen Glutens in der Lebensmittelherstellung von Bedeutung, da durch einen schraubenlosen Scherraum verhindert wird, dass gelöste oder zerstörte Schrauben und Schraubenteile in das Gluten und somit in Lebensmittel gelangen. Zudem ermöglicht ein schraubenfreier Scherraum eine weiter vereinfachte Reinigung, aufgrund einer Reduktion von zu säubernden Kleinteilen.

Für eine schraubenlose Montage der Vielzahl erster Scherwerkzeuge und/oder der Vielzahl zweiter Scherwerkzeuge an der zugehörigen Welle können die Scherwerkzeuge jeweils auf die zugehörige Hülse aufgeschoben sein. Dazu kann jedes der Scherwerkzeuge einen Innenumfang mit einem Durchmesser haben, der geringfügig größer ist als der Durchmesser eines Außenumfangs der Hülse.

Ferner können für eine drehfeste Verbindung der Scherwerkzeuge mit der zugehörigen Hülse beispielsweise separate Stifte oder Federn zwischen den jeweiligen Scherwerkzeugen und der zugehörigen Hülse vorgesehen sein. Diese Stifte greifen zur Ausbildung einer drehfesten Verbindung abschnittsweise in axiale Ausnehmungen an der Innenumfangsfläche der Scherwerkzeuge und in sich in axialer Richtung erstreckende, längliche Nuten an der Außenumfangsfläche der zugehörigen Hülse ein. Alternativ dazu kann auch eine Nut-Feder-Verbindung unmittelbar, d.h. ohne zusätzliche Stifte, an der Innenumfangsfläche der Scherwerkzeuge und der Außenumfangsfläche der zugehörigen Hülse ausgebildet sein.

In beiden vorstehend beschriebenen Fällen kann ein die Scherwerkzeuganordnung abschließendes Scherwerkzeug an der Hülse angebracht sein, das den Scherraum abschnittsweise begrenzt und wenigstens eine nicht in dem Scherraum angeordnete Fläche aufweist. Diese Fläche umfasst Bohrungen, in die Schrauben zum festen Verbinden des abschließenden Scherwerkzeugs mit der Hülse eingebracht sind. Ein Verschrauben des abschließenden Scherwerkzeugs mit der Hülse fixiert die Vielzahl von Scherwerkzeugen, also die Scherwerkzeuganordnung, auf der entsprechenden Hülse und begrenzt bzw. verhindert ein axiales Spiel der auf die Hülse aufgeschobenen Scherwerkzeuge. Da die Schraubenköpfe in diesem Ausführungsbeispiel auf der nicht in dem Scherraum angeordneten Fläche aufsitzen und die Schraubenschäfte vollständig in den Körpern des abschließenden Scherwerkzeugs und der Hülse verschraubt sind, erstreckt sich kein Abschnitt der Schrauben in den Scherraum, sodass kein Schraubenteil mit dem zu bearbeitenden Gemisch in Berührung gelangt.

In einer Weiterbildung der Erfindung kann das Scheraggregat ferner eine Antriebseinrichtung umfassen, die über ein Riemengetriebe mit der ersten Welle und der zweiten Welle verbunden ist. Die Antriebseinrichtung ist dazu ausgeführt, mittels des Riemengetriebes die erste Welle mit einer ersten Drehzahl zu drehen und die zweite Welle mit einer zweiten Drehzahl zu drehen. Die erste Drehzahl kann sich von der zweiten Drehzahl unterscheiden. Auch kann sich die Drehrichtung der ersten Welle von der Drehrichtung der zweiten Welle unterscheiden. Durch das Antreiben der Wellen mit unterschiedlichen Drehzahlen und/oder Drehrichtungen können zusätzliche Scherwirkungen erzeugt werden. Durch ein Anpassen des Riemenantriebs, d.h. ein definiertes Ansteuern der Antriebseinrichtung und/oder ein Einstellen des Riemengetriebes, kann die Scherwirkung des Scheraggregats, auch während des Betriebs, verändert werden.

Gemäß einer weiteren Ausführungsform der Erfindung kann das Scheraggregat einen Zweitstoffzulauf umfassen, der dazu eingerichtet ist, dem Scherraum ein Medium zuzuführen. Durch das Zuführen eines Mediums werden die gelöste Stärke und die sonstigen gelösten Bestandteile bereits während des Bearbeitens aus dem Gemisch ausgewaschen. Insbesondere kann der Zweitstoffzulauf eine Wasserlanze sein, die dazu eingerichtet ist, dem Scherraum Wasser zuzuführen, wobei eine Zuführöffnung der Wasserlanze vorzugsweise im Bereich des Einlasses des Scherraums angeordnet ist.

Die Erfindung betrifft des Weiteren ein System mit einem Scheraggregat der vorstehend beschriebenen Art und einer damit verbundenen Pumpeinrichtung, vorzugsweise einer Trichterpumpe, die dazu eingerichtet ist, ein zu scherendes Gemisch durch den Scherraum des Scheraggregats zu fördern.

Die Erfindung betrifft auch ein Verfahren zur Gewinnung von Gluten aus einem stärke- und glutenhaltigen Gemisch, umfassend die Schritte:
- Zuführen eines Gemisches in einen Scherraum eines Scheraggregats, insbesondere eines Scheraggregats der vorstehend beschriebenen Art,
- Drehantreiben einer ersten Welle, die eine Vielzahl scheibenförmiger erster Scherwerkzeuge aufweist, die drehfest an der ersten Welle angebracht sind, wobei jeweils zwei benachbarte Scherwerkzeuge der Vielzahl erster Scherwerkzeuge axial voneinander beabstandet sind, sodass sie einen Zwischenraum bilden,
- Drehantreiben einer zweiten Welle, die parallel zu der ersten Welle angeordnet ist und die eine Vielzahl scheibenförmiger zweiter Scherwerkzeuge aufweist, die drehfest an der zweiten Welle angebracht sind, wobei jeweils zwei benachbarte Scherwerkzeuge der Vielzahl zweiter Scherwerkzeugen axial voneinander beabstandet sind, sodass sie einen weiteren Zwischenraum bilden,
   wobei die ersten und zweiten Scherwerkzeuge in dem Scherraum angeordnet sind,
- wiederholtes Eingreifen lassen wenigstens eines Abschnitts eines der Vielzahl zweiter Scherwerkzeuge in den Zwischenraum durch das Drehantreiben der ersten und der zweiten Welle, wobei zwischen dem wenigstens einen Abschnitt und den beiden benachbarten, den Zwischenraum bildenden ersten Scherwerkzeugen in axialer Richtung jeweils ein Spalt einer Breite von mindestens 0,3 mm, vorzugsweise mindestens 0,5 ausgebildet ist, zum Herauslösen von Stärke aus dem Gemisch.

Das erfindungsgemäße Verfahren kann in einer Weiterbildung ferner die Schritte umfassen:
- Zuführen eines Mediums, wie beispielsweise Wasser, Luft, Salz, etc., oder eines Stoffgemischs, beispielsweise eines Fluid-Feststoff-Gemischs, vorzugsweise direkt, in den Scherraum, und
- Ausspülen der herausgelösten Stärke aus dem Gemisch mittels des zugeführten Mediums.

Ferner kann das erfindungsgemäße Verfahren in einer Weiterbildung die Schritte umfassen:
- Unter Druck setzen des Scherraums; und vorzugsweise
- Varrieren des Drucks innerhalb des Scherraums während des Glutengewinnungsprozesses, d.h. Erhöhen oder Verringern des beaufschlagten Drucks zum gezielten Intensivieren oder Reduzieren der Wirkungen des Verfahrens.

Gemäß einer weiteren Ausführungsform kann das erfindungsgemäße Verfahren durch ein Einstellen weiterer Prozessgrößen beeinflusst werden. So kann beispielsweise die Temperatur des Gemischs mittels Heizelementen oder über das zugeführte Medium angepasst oder gesteuert werden. Ferner kann beispielsweise der Durchsatz des Gemischs, also der Volumenstrom des Gemischs, variiert werden.

Es versteht sich, dass das vorstehend beschriebene Scheraggregat und das vorstehend beschriebene Verfahren nicht ausschließlich zur Aufschließung und Gewinnung von Gluten, sondern auch zum Scheren von weiteren Zweiphasengemischen verwendet werden können.

Bevorzugte Ausführungsformen der Erfindung werden nachfolgend anhand der beigefügten, schematischen Zeichnungen näher erläutert. Es stellen dar:
- Figur 1: eine perspektivische Ansicht eines Gehäuses und auf Hülsen angeordneter Scherwerkzeuge des erfindungsgemäßen Scheraggregats;
- Figur 2: einen Ausschnitt einer Schnittdarstellung des erfindungsgemäßen Scheraggregats im Bereich des Scherraums;
- Figur 3: einen Ausschnitt einer Schnittdarstellung des erfindungsgemäßen Scheraggregats mit einem Riemengetriebe;
- Figur 4: eine vergrößerte Detailansicht eines Bereichs der Schnittdarstellung aus den Figuren 2 und 3;
- Figur 5: eine perspektivische Explosionszeichnung einer ersten Scherwerkzeuganordnung des erfindungsgemäßen Scheraggregats;
- Figur 6: eine Schnittdarstellung der ersten Scherwerkzeuganordnung aus Figur 5;
- Figur 7: eine perspektivische Ansicht der ersten Scherwerkzeuganordnung aus Figur 5;
- Figur 8: eine perspektivische Explosionszeichnung einer zweiten Scherwerkzeuganordnung des erfindungsgemäßen Scheraggregats;
- Figur 9: eine Schnittdarstellung der zweiten Scherwerkzeuganordnung aus Figur 8;
- Figur 10: eine perspektivische Ansicht der zweiten Scherwerkzeuganordnung aus Figur 8;
- Figur 11: eine perspektivische Ansicht eines ersten Ausführungsbeispiels eines Scherwerkzeugs des erfindungsgemäßen Scheraggregats;
- Figur 12: eine perspektivische Ansicht eines zweiten Ausführungsbeispiels eines Scherwerkzeugs des erfindungsgemäßen Scheraggregats;
- Figur 13: eine perspektivische Ansicht eines dritten Ausführungsbeispiels eines Scherwerkzeugs des erfindungsgemäßen Scheraggregats.

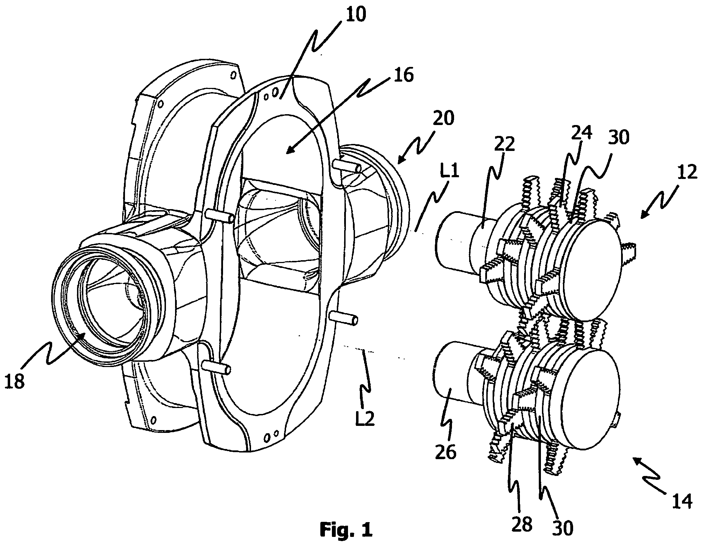

Fig. 1 zeigt ein Gehäuse 10 sowie eine erste und eine zweite Scherwerkzeuganordnung 12, 14 gemäß einer Ausführungsform des erfindungsgemäßen Scheraggregats. Das Gehäuse 10 hat einen Scherraum 16, in dem die beiden Scherwerkzeuganordnungen 12, 14 in einem montierten Zustand des Scheraggregats angeordnet sind (in Fig. 1 nicht gezeigt). Ferner hat das Gehäuse 10 einen Einlass 18 zum Beschicken des Scherraums 16 mit einem zu scherenden stärke- und glutenhaltigen Gemisch sowie einen Auslass 20 für aus dem Gemisch gewonnenes Gluten.

Zur Förderung des Gemischs durch das Scheraggregat ist das Scheraggregatgehäuse 10 einlassseitig mit einer Pumpeinrichtung (nicht gezeigt), wie beispielsweise einer Trichterpumpe, verbindbar.

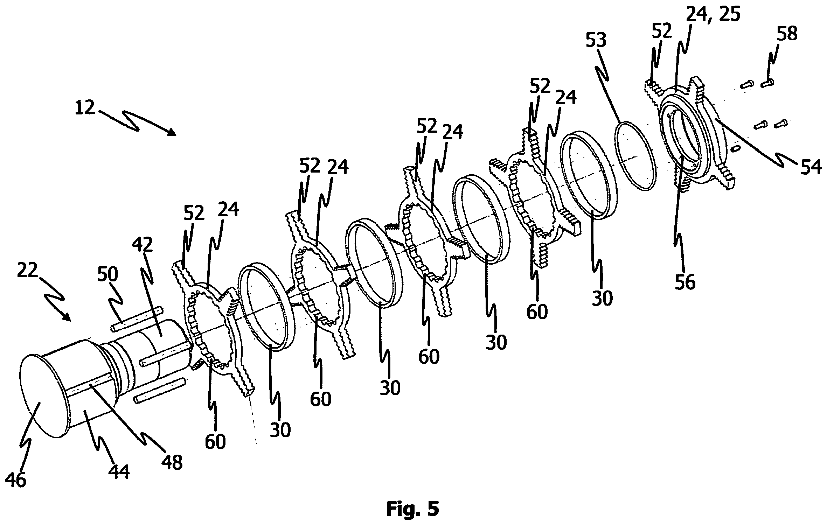

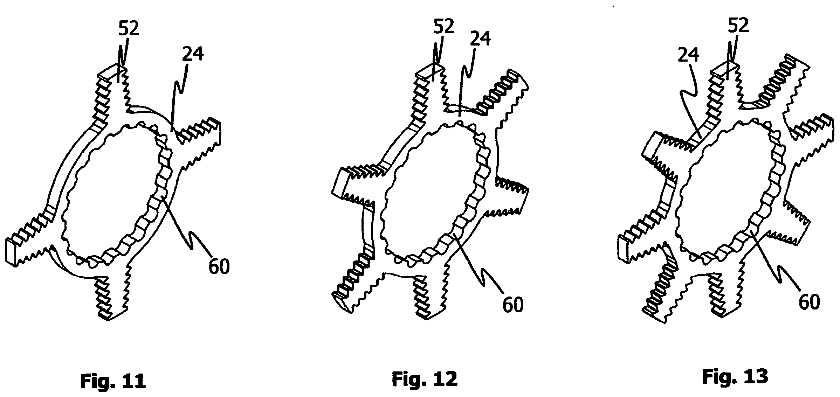

Die In Fig. 1 gezeigte erste Scherwerkzeuganordnung 12 umfasst eine Vielzahl von auf einer Hülse 22 angeordneter, scheibenförmiger erster Scherwerkzeuge 24, während die zweite Scherwerkzeuganordnung 14 eine Vielzahl von auf einer weiteren Hülse 26 angeordneter, scheibenförmiger zweiter Scherwerkzeuge 28 umfasst. In der in Fig. 1 gezeigten Ausführungsform des erfindungsgemäßen Scheraggregats sind die ersten und zweiten Scherwerkzeuge 24, 28 jeweils separat von den zugehörigen Hülsen 22, 26 ausgebildet und auf diesen drehfest montiert. Zwischen benachbarten ersten Scherwerkzeugen 24 sowie zwischen benachbarten zweiten Scherwerkzeugen 28 sind Abstandsringe 30 angeordnet, die benachbarte Scherwerkzeuge 24, 28 in Richtung einer Längsachse der jeweiligen Scherwerkzeuganordnung 12, 14 axial voneinander beabstanden. Die genaue Anbringung der Scherwerkzeuge auf der Hülse ist in Bezug auf die Figuren 5 bis 10 näher beschrieben, während die geometrische Ausbildung der Scherwerkzeuge im Zusammenhang mit den Figuren 11 bis 13 im Detail diskutiert ist.

Die ersten und zweiten Scherwerkzeuganordnungen 12, 14 sind jeweils drehfest mit einer Antriebswelle (nicht gezeigt) verbindbar, wobei sich die Welle der ersten Scherwerkzeuganordnung 12 parallel zu der Welle der zweiten Scherwerkzeuganordnung 14 erstreckt und die beiden Wellen hinsichtlich ihrer Rotationsachsen radial voneinander beabstandet sind, was in Fig. 1 durch die Linien L1, L2 angedeutet ist.

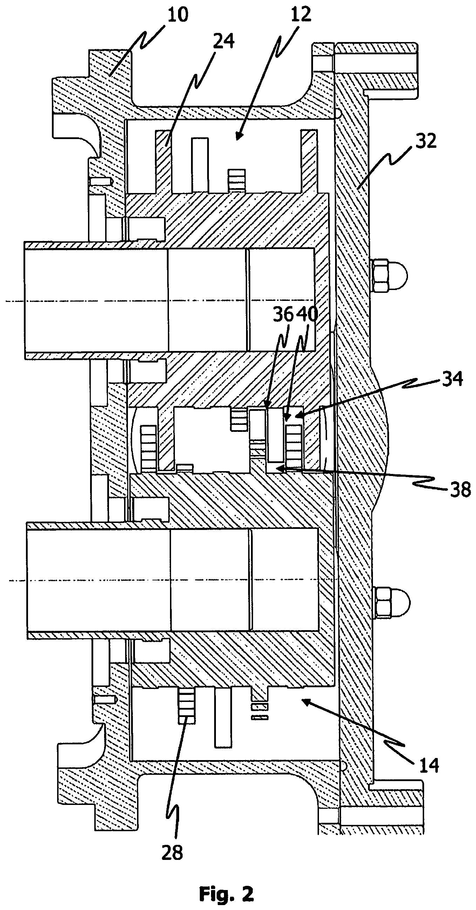

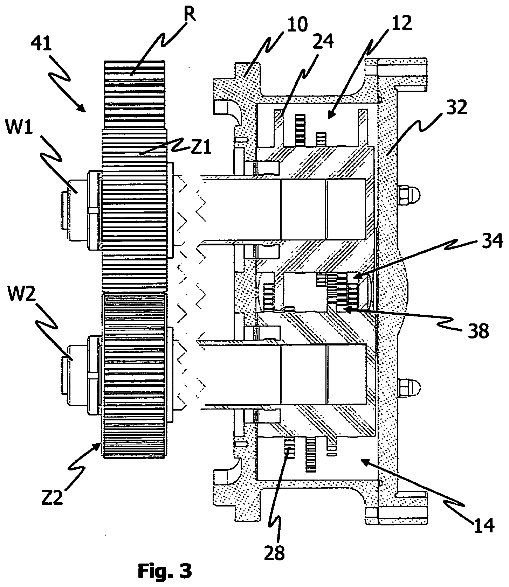

Die Figuren 2 und 3 stellen jeweils eine Schnittdarstellung des mittels eines Deckels 32 dicht verschlossenen Scherraums 16 des erfindungsgemäßen Scheraggregats dar, in dem die ersten und die zweiten Scherwerkzeuganordnungen 12, 14 angeordnet sind.

Im Unterschied zu der in Fig. 1 gezeigten Ausführungsform sind die ersten und zweiten Scherwerkzeuge 24, 28 der Ausführungsform gemäß den Figuren 2 und 3 jeweils einstückig mit der zugehörigen Hülse 22, 26 ausgebildet. Die nachstehenden Beschreibungen zu den Figuren 2 und 3 gelten jedoch sowohl für einstückig mit der zugehörigen Hülse ausgebildete Scherwerkzeuge als auch für separat von der zugehörigen Hülse ausgebildete Scherwerkzeuge.

Durch die Anordnung der Scherwerkzeuganordnungen 12, 14 auf den beiden Wellen (nicht gezeigt) ist die Vielzahl erster Scherwerkzeuge 24 relativ zu der Vielzahl zweiter Scherwerkzeuge 28 axial solchermaßen versetzt, dass ein Abschnitt eines der Vielzahl zweiter Scherwerkzeuge 28 in einen Zwischenraum 34 eingreift. Zwischen dem wenigstens einen eingreifenden Abschnitt und den beiden benachbarten, den Zwischenraum 34 bildenden ersten Scherwerkzeugen 24 ist in axialer Richtung jeweils ein Spalt 36 ausgebildet. Dieser Spalt 36 hat in der gezeigten Ausführungsform eine axiale Breite von mindestens 0,3 mm, vorzugsweise von mindestens 0,5 mm.

Ferner ist aus den Figuren 2 und 3 ersichtlich, dass auch ein Abschnitt eines der Vielzahl erster Scherwerkzeuge 24 in einen weiteren Zwischenraum 38 eingreift, wobei zwischen dem wenigstens einen eingreifenden Abschnitt eines der Vielzahl erster Scherwerkzeuge 24 und den beiden benachbarten, den weiteren Zwischenraum 38 bildenden zweiten Scherwerkzeugen 28 in axialer Richtung jeweils ein weiterer Spalt 40 ausgebildet ist. Dieser weitere Spalt 40 hat in der gezeigten Ausführungsform ebenfalls eine axiale Breite von mindestens 0,3 mm, vorzugsweise von mindestens 0,5 mm.

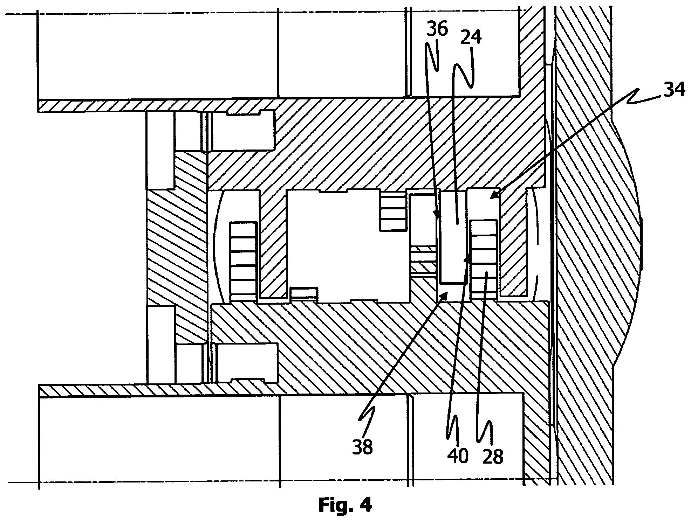

Die vorstehend beschriebenen Zwischenräume 34, 38 und Spalte 36, 40 sind in der in Fig. 4 gezeigten, vergrößerten Darstellung besser zu erkennen, welche einen Ausschnitt der Ansicht aus den Figuren 2 und 3 zeigt.

Aus Übersichtlichkeitsgründen sind in den Figuren 2 und 4 lediglich ein Zwischenraum 34, ein Spalt 36, ein weiterer Zwischenraum 38 und ein weiterer Spalt 40 mit Bezugszeichen versehen. Es ist jedoch in den Figuren zu erkennen, dass zusätzliche Zwischenräume durch benachbarte erste Scherwerkzeuge 24 sowie durch benachbarte zweite Scherwerkzeuge 28 definiert sind, in die jeweils ein Abschnitt der Vielzahl der anderen Scherwerkzeuge eingreift. Die genaue Anzahl an ausgebildeten Zwischenräumen, an darin eingreifenden Abschnitte und an dadurch definierten Spalten zwischen ersten und zweiten Scherwerkzeugen kann je nach Ausbildung der Scherwerkzeuganordnungen 12, 14 nahezu beliebig gewählt werden.

Im Betrieb des erfindungsgemäßen Scheraggregats werden die Scherwerkzeuganordnungen 12, 14 mittels der fest mit den Hülsen 22, 26 verbundenen Wellen W1, W2 in Rotation versetzt. Dazu sind die Wellen W1, W2 jeweils an einem von den Scherwerkzeuganordnungen 12, 14 abgewandten Ende über ein Riemengetriebe 41 mit einer Antriebseinrichtung (nicht gezeigt, aber üblicherweise ein Elektromotor) gekoppelt. Genauer gesagt sind die Wellen W1, W2, wie aus Fig. 3 zu erkennen ist, jeweils über drehfest mit den Wellen W1, W2 verbundene Zahnräder Z1, Z2 mit einem Riemen R des Riemengetriebes 41 gekoppelt. Über den Riemen R sind die Wellen W1, W2, vorzugsweise mit unterschiedlichen Drehzahlen und/oder Drehrichtungen, antreibbar. Hierzu verläuft der Riemen R in der gezeigten Darstellung von der Antriebseinrichtung kommend entlang der Rückseite des Zahnrads Z1, erstreckt sich zwischen den Zahnrädern Z1, Z2 hindurch zur Vorderseite der Zahnräder, umschließt das Zahnrad Z2 nahezu vollständig und erstreckt sich schließlich von der Rückseite des zweiten Zahnrads Z2 hin zu der nicht gezeigten Antriebseinrichtung (die bei dem Ausführungsbeispiel gemäß Fig. 3 oberhalb der Zahnräder angeordnet ist).

Durch das Rotieren der Scherwerkzeuganordnungen 12, 14 greifen während des Betriebs Abschnitte verschiedener erster und zweiter Scherwerkzeuge 24, 28 temporär in jeweils zugeordnete Zwischenräume 34, 38 ein, wodurch das stärke- und glutenhaltige Gemisch durch die sich ausbildenden Spalte 36, 40 hindurch gefördert und scherend beansprucht wird. Durch die Scherbeanspruchungen wird das Gemisch aufgeschlossen, wodurch lösliche Bestandteile und insbesondere Stärke mittels zusätzlich in den Scherraum 16 eingebrachten Wassers oder eines sonstigen Mediums aus dem Gemisch ausgewaschen wird. Dies erhöht den Proteinanteil und somit die Qualität des durch die Bearbeitung gewonnenen Glutens.

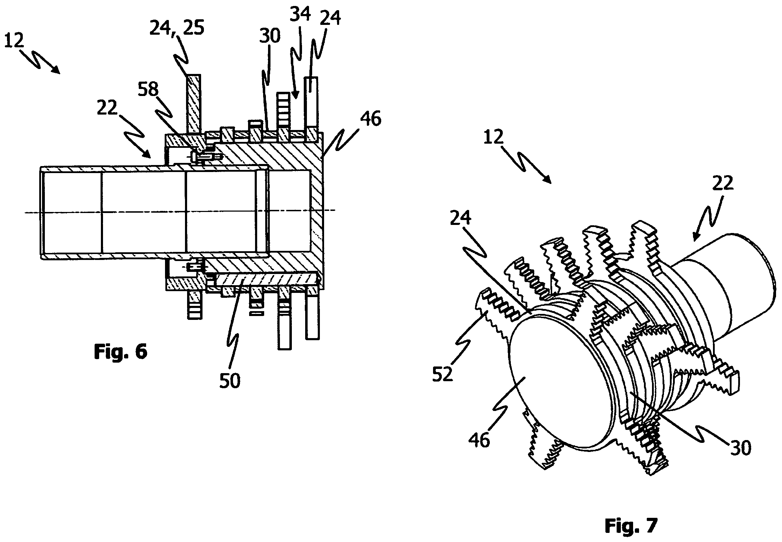

Die Figuren 5 bis 7 zeigen eine beispielhafte erste Scherwerkzeuganordnung 12 des erfindungsgemäßen Scheraggregats in einer perspektivischen Explosionszeichnung (Fig. 5), einer Schnittdarstellung (Fig. 6) und in einer perspektivischen Ansicht (Fig. 7).

Wie aus den Figuren 5 und 6 zu erkennen ist, hat die Hülse 22 der ersten Scherwerkzeuganordnung 12 einen Abschnitt 42 eines ersten Durchmessers, der in einen Abschnitt 44 eines zweiten Durchmessers übergeht, wobei der erste Durchmesser kleiner als der zweite Durchmesser ist. Der Abschnitt 42 mit dem ersten Durchmesser ist zumindest teilweise hohl und hat eine Aufnahmeöffnung zum Aufnehmen eines Endbereichs einer Antriebswelle (nicht gezeigt), mit der die Hülse 22 drehfest verbindbar ist. Der Abschnitt 44 mit dem zweiten Durchmesser schließt sich an einem der Aufnahmeöffnung entgegengesetzten Ende des Abschnitts 42 mit dem ersten Durchmesser an diesen an. Die Hülse 22 wird an einem der Aufnahmeöffnung entgegengesetzten Ende des Abschnitts 44 mit dem zweiten Durchmesser von einer Abschlussplatte 46 begrenzt, die einen größeren Durchmesser als der Abschnitt 44 mit dem zweiten Durchmesser hat. Die Abschlussplatte 46 und die beiden Abschnitte 42, 44 der Hülse 22 sind in dem gezeigten Beispiel einstückig ausgebildet. Insbesondere die Abschlussplatte 46 kann jedoch auch als separates Bauteil ausgebildet und fest mit dem Abschnitt 44 verbunden sein.

Des Weiteren sind in der Außenumfangsfläche des Abschnitts 44 der Hülse 22 vier längliche Nuten 48 ausgebildet, die sich axial über die gesamte Länge des Abschnitts 44 erstrecken. In weiteren Ausführungsformen der Erfindung kann eine beliebige Mehrzahl solcher Nuten in der Außenumfangsfläche des Abschnitts 44 der Hülse 22 vorhanden sein. Die Nuten 48 sind jeweils dazu ausgebildet, einen separaten Stift 50 abschnittsweise aufzunehmen, wie unten näher erläutert.

Wie aus den Darstellungen der Figuren 5 bis 7 ersichtlich ist, sind fünf scheibenförmige Scherwerkzeuge 24 koaxial zu der Hülse 22 angeordnet und werden zur Montage der Reihe nach auf die Hülse 22 aufgeschoben. Genauer gesagt werden die Scherwerkzeuge 24 zur Montage auf den Abschnitt 44 des zweiten Durchmessers der Hülse 22 aufgeschoben. Dabei werden die Scherwerkzeuge 24 axial von der Abschlussplatte 46 begrenzt, indem das der Abschlussplatte 46 benachbarte Scherwerkzeug 24 mit ersterer in Anlage gelangt, wobei der Außendurchmesser der Abschlussplatte größer ist als der Durchmesser des Innenumfangs des benachbarten Scherwerkzeugs 24.

Zwischen zwei benachbarten Scherwerkzeugen 24 ist jeweils ein Abstandsring 30 angeordnet, der zur Montage ebenfalls auf den Abschnitt 44 der Hülse 22 aufgeschoben wird und so jeweils benachbarte Scherwerkzeuge 24 voneinander beabstandet. Der Durchmesser des Innenumfangs der Scherwerkzeuge 24 und der Abstandsringe 30 ist geringfügig größer als der zweite Durchmesser des Abschnitts 44, sodass ein Aufschieben und Abziehen der Scherwerkzeuge 24 und der Abstandsringe 30 auf den bzw. von dem Abschnitt 44 mit dem zweiten Durchmesser einfach möglich ist.

Die scheibenförmigen Scherwerkzeuge 24 sind in dem gezeigten Ausführungsbeispiel sternförmig ausgebildet und haben jeweils vier Sternzacken 52. An jedem der Sternzacken 52 der Scherwerkzeuge 24 ist eine Verzahnung ausgebildet. Es versteht sich, dass auch eine andere geometrische Ausbildung der scheibenförmigen Scherwerkzeuge mit und/oder ohne Verzahnung möglich ist.

Das die erste Scherwerkzeuganordnung 12 abschließende Scherwerkzeug 25 der fünf Scherwerkzeuge 24, das im montierten Zustand am weitesten von der Abschlussplatte 46 beabstandet ist, ist auf einer der Abschlussplatte 46 der Hülse 22 zugewandten ersten Seite abschnittsweise komplementär zu dem Übergangsbereich der Hülse 22 zwischen dem Abschnitt 42 mit dem ersten Durchmesser und dem Abschnitt 44 mit dem zweiten Durchmesser ausgebildet und steht im montierten Zustand mit diesem in Eingriff. Zudem umfasst das abschließende Scherwerkzeug 25 auf einer von der Abschlussplatte 46 der Hülse 22 abgewandten zweiten Seite einen Ringflansch 54.

Ferner ist ein Dichtring 53 vorgesehen, der im montierten Zustand radial zwischen einem Abschnitt des abschließenden Scherwerkzeugs 25 und dem Übergangsbereich der Hülse 22 angeordnet ist.

Das abschließende Scherwerkzeug 25 weist ferner Bohrungen 56 auf, die sich von seiner zweiten Seite bis zu seiner ersten Seite erstrecken. Zum Montieren der ersten Scherwerkzeuganordnung 12 werden Schrauben 58 von der zweiten Seite des abschließenden Scherwerkzeugs 25 in die Bohrungen 56 eingebracht und in den Übergangsbereich der Hülse 22 eingeschraubt. Dabei gelangen die Schraubenköpfe der Schrauben 58 in Anlage mit einer Fläche auf der zweiten Seite des abschließenden Scherwerkzeugs 25. Durch diese Verschraubung werden das abschließende Scherwerkzeug 25 und die weiteren Scherwerkzeuge 24 und Abstandsringe 30 horizontal auf der Hülse 22 fixiert. Zudem wird zumindest das abschließende Scherwerkzeug 25 mittels der Verschraubung drehfest mit der Hülse 22 verbunden.

Zum Sicherstellen einer drehfesten Verbindung der weiteren Scherwerkzeuge 24 mit der Hülse 22 weisen die weiteren Scherwerkzeuge 24 entlang ihres Innenumfangs eine Vielzahl aufeinanderfolgender Ausnehmungen 60 auf, die dazu ausgebildet sind, die Stifte 50 abschnittsweise aufzunehmen. Es versteht sich, dass in alternativen Ausführungsformen der Erfindung die Anzahl der an den Innenumfangsflächen der weiteren Scherwerkzeuge 24 ausgebildeten Ausnehmungen 60 nahezu beliebig gewählt werden kann, wobei die Anzahl der Ausnehmungen 60 in jedem der weiteren Scherwerkzeuge 24 wenigstens der der Stifte 50 entsprechen muss. Ein Vorsehen einer möglichst großen Anzahl an Ausnehmungen vereinfacht jedoch die Montage der Scherwerkzeuge 24 an der Hülse 22.

Beim Aufschieben der Scherwerkzeuge 24 auf die Hülse 22 greifen die Stifte 50 mit einem Bereich ihrer Umfangsfläche in die Nuten 48 und mit einem anderen Bereich ihrer Umfangsfläche in die Ausnehmungen 60 ein. Somit sind die Stifte 50 in einem montierten Zustand der ersten Scherwerkzeuganordnung 12 zwischen den Scherwerkzeugen 24 und der Hülse 22 angeordnet, wodurch eine drehfeste Verbindung zwischen den Scherwerkzeugen 24 und der Hülse 22 hergestellt ist.

Die montierte erste Scherwerkzeuganordnung 12 wird solchermaßen in dem erfindungsgemäßen Scheraggregat angeordnet, dass sich die mit den Schraubenköpfen in Anlage stehende Fläche des abschließenden Scherwerkzeugs 25 außerhalb des Scherraums 16 befindet. Somit sind auch die Schraubenköpfe der Schrauben 58 in dem montierten Zustand der ersten Scherwerkzeuganordnung 12 außerhalb des Scherraums 16 angeordnet, sodass diese im Falle eines sich Lösens nicht in das zu bearbeitende Gemisch gelangen können.

Die vorstehend beschriebene Ausbildung der ersten Scherwerkzeuganordnung 12 ermöglicht somit eine innerhalb des Scherraums 16 schraubenlose, drehfeste Verbindung der Scherwerkzeuge 24 mit der Hülse 22. Da zudem die Hülse 22 in Ihrem Inneren mit der Antriebswelle (nicht gezeigt) fest verbunden ist, ist innerhalb des Scherraums 16 auch eine schraubenlose Verbindung der ersten Scherwerkzeuganordnung 12 bzw. der Scherwerkzeuge 24 mit der Antriebswelle sichergestellt. Dies ist für den Einsatz des erfindungsgemäßen Scheraggregats in der Lebensmittelindustrie von Vorteil.

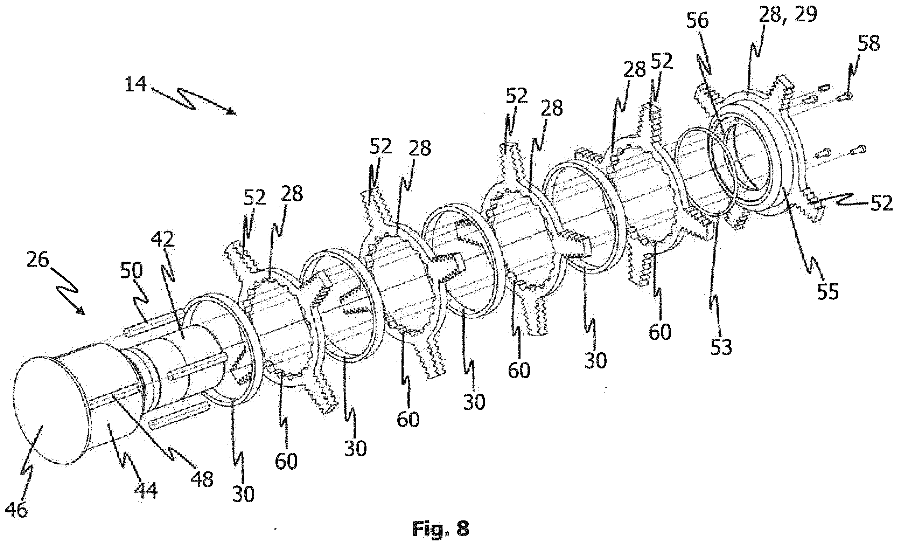

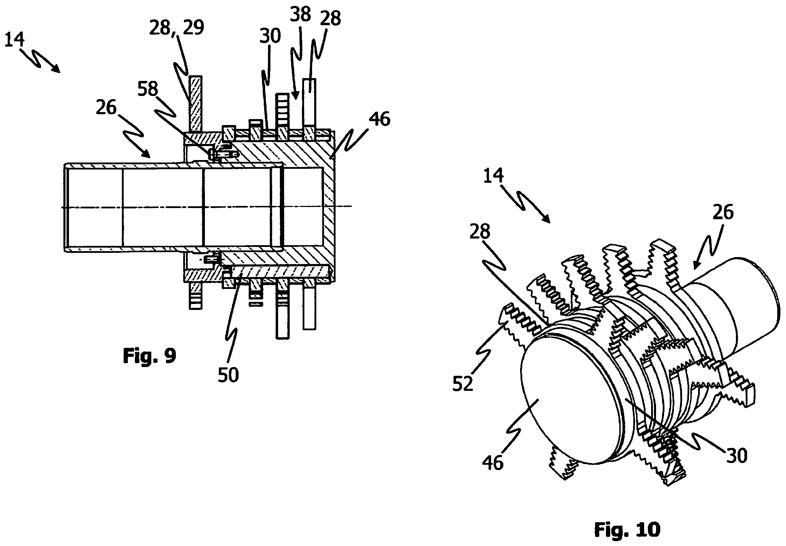

Die Figuren 8 bis 10 zeigen eine beispielhafte zweite Scherwerkzeuganordnung 14 des erfindungsgemäßen Scheraggregats in einer perspektivischen Explosionszeichnung (Fig. 8), einer Schnittdarstellung (Fig. 9) und in einer perspektivischen Ansicht (Fig. 10). Die beispielhafte zweite Scherwerkzeuganordnung 14 der Figuren 8 bis 10 entspricht im Wesentlichen der in den Figuren 5 bis 7 gezeigten ersten Scherwerkzeuganordnung 12. Deshalb wird nachstehend lediglich auf Unterschiede zwischen den Scherwerkzeuganordnungen der Figuren 8 bis 10 und der Figuren 5 bis 7 eingegangen.

Im Gegensatz zu der vorstehend beschriebenen ersten Scherwerkzeuganordnung 12 umfasst die zweite Scherwerkzeuganordnung 14 der Figuren 8 bis 10 einen weiteren Abstandsring 30, der zwischen der Abschlussplatte 46 der weiteren Hülse 26 und dem dazu benachbarten Scherwerkzeug 28 angeordnet ist und sich gegenüber der Abschlussplatte 46 und dem benachbarten Scherwerkzeug 28 abstützt. Hingegen ist zwischen dem abschließenden Scherwerkzeug 29 und einem dazu benachbarten Scherwerkzeug 28 kein zusätzlicher Abstandsring angeordnet. Das abschließende Scherwerkzeug 29 und das diesem benachbarte Scherwerkzeug 28 sind in der zweiten Scherwerkzeuganordnung 14 lediglich durch einen Ringflansch 55 des abschließenden Scherwerkzeugs voneinander beabstandet. Dieser Ringflansch 55 erstreckt sich in dem in den Figuren 8 bis 10 gezeigten Ausführungsbeispiel von dem abschließenden Scherwerkzeug 29 in Richtung des benachbarten Scherwerkzeugs 28.

Durch die unterschiedliche Ausbildung und/oder Anordnung der ersten und zweiten Scherwerkzeuganordnungen 12, 14 bzw. der ersten und zweiten Scherwerkzeuge 24, 28 auf den zugehörigen Hülsen 22, 26 kann ein vorgesehener, axialer Versatz der ersten und zweiten Scherwerkzeuge 24, 28 in einem montierten Zustand des erfindungsgemäßen Scheraggregats erreicht werden. Dieser axiale Versatz stellt sicher, dass während eines Betriebs des erfindungsgemäßen Scheraggregats Abschnitte der ersten und zweiten Scherwerkzeuge 24, 28, genauer gesagt der Sternzacken 52, in zugehörige, durch die jeweils anderen Scherwerkzeuge 24, 28 gebildete Zwischenräume 34, 38 temporär eingreifen.

Zudem kann durch eine Wahl der axialen Breite der ersten und zweiten Scherwerkzeuge 24, 28 sowie der Abstandsringe 30 die axiale Breite der Spalte 36, 40 zwischen dem jeweils eingreifenden Abschnitt und den zugehörigen benachbarten, den Zwischenraum bildenden Scherwerkzeugen festgelegt werden.

Die Figuren 11 bis 13 zeigen verschiedene beispielhafte Ausführungsformen schelbenförmiger Scherwerkzeuge 24, 28 des erfindungsgemäßen Scheraggregats. Alle Scherwerkzeuge 24, 28 der gezeigten Ausführungsformen haben eine sternförmige Gestalt, wobei an den Sternzacken 52 jeweils Verzahnungen ausgebildet sind. Während Fig. 11 ein scheiben- und sternförmiges Scherwerkzeug 24, 28 mit vier Sternzacken 52 zeigt, stellt Fig. 12 ein scheiben- und sternförmiges Scherwerkzeug 24, 28 mit sechs Sternzacken 52 und Fig. 13 ein scheiben- und sternförmiges Scherwerkzeuge 24, 28 mit acht Sternzacken 52 dar. In weiteren nicht gezeigten Ausführungsformen können die scheibenförmigen Scherwerkzeuge des erfindungsgemäßen Scheraggregats von beliebiger, nicht sternförmiger geometrischer Gestalt mit oder ohne Verzahnung sein. Beispielsweise können die Scherwerkzeuge einen wellenförmigen Außenumfang mit oder ohne abschnittsweiser Verzahnung aufweisen. Zudem ist es möglich, dass innerhalb einer Scherwerkzeuganordnung oder zwischen den beiden Scherwerkzeuganordnungen des erfindungsgemäßen Scheraggregats auch Scherwerkzeuge unterschiedlicher Gestalt vorgesehen sein können.

Es versteht sich, dass die zuvor erläuterten beispielhaften Ausführungsformen der Erfindung nicht abschließend sind und den Gegenstand der Erfindung nicht beschränken sollen. Insbesondere ist für den Fachmann ersichtlich, dass er die Merkmale der verschiedenen Ausführungsformen miteinander kombinieren kann und/oder verschiedene Merkmale der Ausführungsformen weglassen kann, ohne dabei vom Gegenstand der Erfindung abzuweichen.

## Patentansprüche

1. Scheraggregat zur Gewinnung von Gluten aus einem stärke- und glutenhaltigen zähen Gemisch mit
einem Gehäuse (10), in dem ein Scherraum (16) mit einem Einlass (18) und einem Auslass (20) ausgebildet ist, wobei das Gehäuse (10) zur Förderung des Gemisches durch das Scheraggregat einlassseitig mit einer Pumpeinrichtung verbindbar ist, die dazu eingerichtet ist, das Gemisch durch den Scherraum (16) des Scheraggregats zu fördern;
einer drehbar in dem Gehäuse (10) gelagerten ersten Welle (W1), die eine Vielzahl scheibenförmiger erster Scherwerkzeuge (24) aufweist, die drehfest an der ersten Welle (W1) angebracht sind, wobei jeweils zwei benachbarte Scherwerkzeuge der Vielzahl erster Scherwerkzeuge (24) axial voneinander beabstandet sind, sodass sie einen Zwischenraum (34) bilden,
einer drehbar in dem Gehäuse (10) gelagerten zweiten Welle (W2), die parallel zu der ersten Welle (W1) angeordnet ist und die eine Vielzahl scheibenförmiger zweiter Scherwerkzeuge (28) aufweist, die drehfest an der zweiten Welle (W2) angebracht sind, wobei jeweils zwei benachbarte Scherwerkzeuge der Vielzahl zweiter Scherwerkzeuge (28) axial voneinander beabstandet sind, sodass sie einen weiteren Zwischenraum (38) bilden,
wobei die ersten und zweiten Scherwerkzeuge (24, 28) in dem Scherraum (16) angeordnet sind,
wobei die erste und die zweite Welle (W1, W2) radial so voneinander beabstandet sind und die Vielzahl erster Scherwerkzeuge (24) relativ zu der Vielzahl zweiter Scherwerkzeuge (28) axial solchermaßen versetzt ist, dass wenigstens ein Abschnitt eines der Vielzahl zweiter Scherwerkzeuge (28) in einen Zwischenraum (34) eingreift, und
wobei zwischen dem wenigstens einen eingreifenden Abschnitt und den beiden benachbarten, den Zwischenraum (34) bildenden ersten Scherwerkzeugen (24) in axialer Richtung jeweils ein Spalt (36) einer Breite von mindestens 0,3 mm, vorzugsweise mindestens 0,5 mm ausgebildet ist.

2. Scheraggregat nach Anspruch 1, bei dem wenigstens ein Abschnitt eines der Vielzahl erster Scherwerkzeuge (24) in den weiteren Zwischenraum (38) eingreift, und
wobei zwischen dem wenigstens einen eingreifenden Abschnitt eines der Vielzahl erster Scherwerkzeuge (24) und den beiden benachbarten, den weiteren Zwischenraum (38) bildenden zweiten Scherwerkzeugen (28) in axialer Richtung jeweils ein weiterer Spalt (40) einer Breite von mindestens 0,3 mm, vorzugsweise mindestens 0,5 mm ausgebildet ist.

3. Scheraggregat nach Anspruch 1 oder 2, bei dem der Spalt (36) und/oder der weitere Spalt (40) eine axiale Breite von mindestens 1 mm, vorzugsweise von mindestens 2 mm hat.

4. Scheraggregat nach einem der Ansprüche 1 bis 3, bei dem die ersten Scherwerkzeuge (24) und/oder die zweiten Scherwerkzeuge (28) sternförmig sind.

5. Scheraggregat nach Anspruch 4, bei dem an einer Außenumfangsfläche wenigstens eines Sternzackens (52) des ersten Scherwerkzeugs (24) und/oder des zweiten Scherwerkzeugs (28) zumindest abschnittsweise eine Verzahnung ausgebildet ist.

6. Scheraggregat nach einem der vorhergehenden Ansprüche, bei dem die Vielzahl erster Scherwerkzeuge (24) und/oder die Vielzahl zweiter Scherwerkzeuge (28) drehfest auf einer Hülse (22, 26) angeordnet ist, und
wobei die Hülse (22, 26) drehfest mit der zugehörigen ersten und/oder zweiten Welle verbunden ist.

7. Scheraggregat nach einem der vorhergehenden Ansprüche, bei dem die Vielzahl erster Scherwerkzeuge (24) und/oder die Vielzahl zweiter Scherwerkzeuge (28) innerhalb des Scherraums (16) schraubenlos an der zugehörigen Welle befestigt ist.

8. Scheraggregat nach einem der vorhergehenden Ansprüche, das ferner eine Antriebseinrichtung umfasst, die über ein Riemengetriebe (41) mit der ersten Welle (W1) und der zweiten Welle (W2) verbunden ist,
wobei die Antriebseinrichtung dazu ausgeführt ist, mittels des Riemengetriebes (41) die erste Welle (W1) mit einer ersten Drehzahl zu drehen und die zweite Welle (W2) mit einer zweiten Drehzahl zu drehen.

9. Scheraggregat nach Anspruch 8, bei dem sich die erste Drehzahl von der zweiten Drehzahl unterscheidet und/oder bei dem sich die Drehrichtung der ersten Welle (W1) von der Drehrichtung der zweiten Welle (W2) unterscheidet.

10. Scheraggregat nach einem der vorhergehenden Ansprüche, das ferner einen Zweitstoffzulauf umfasst, der dazu eingerichtet Ist, dem Scherraum (16) ein Medium zuzuführen.

11. Scheraggregat nach Anspruch 10, bei dem der Zweitstoffzulauf eine Wasserlanze ist, die dazu eingerichtet ist, dem Scherraum (16) Wasser zuzuführen, wobei eine Zuführöffnung der Wasserlanze vorzugsweise im Bereich des Einlasses (18) des Scherraums (16) angeordnet ist.

12. System mit einem Scheraggregat nach einem der vorhergehenden Ansprüche und einer damit verbundenen Pumpeinrichtung, vorzugsweise einer Trichterpumpe, die dazu eingerichtet ist, ein zu scherendes Gemisch durch den Scherraum (16) des Scheraggregats zu fördern.

13. Verfahren zur Gewinnung von Gluten aus einem stärke- und glutenhaltigen Gemisch, umfassend die Schritte:
- Zuführen eines Gemisches in einen Scherraum (16) eines Scheraggregats, insbesondere eines Scheraggregats nach einem der Ansprüche 1 bis 11,
- Drehantreiben einer ersten Welle (W1), die eine Vielzahl scheibenförmiger erster Scherwerkzeuge (24) aufweist, die drehfest an der ersten Welle (W1) angebracht sind, wobei jeweils zwei benachbarte Scherwerkzeuge der Vielzahl erster Scherwerkzeuge (24) axial voneinander beabstandet sind, sodass sie einen Zwischenraum (34) bilden,
- Drehantreiben einer zweiten Welle (W2), die parallel zu der ersten Welle (W1) angeordnet ist und die eine Vielzahl scheibenförmiger zweiter Scherwerkzeuge (28) aufweist, die drehfest an der zweiten Welle (W2) angebracht sind, wobei jeweils zwei benachbarte Scherwerkzeuge der Vielzahl zweiter Scherwerkzeugen (28) axial voneinander beabstandet sind, sodass sie einen weiteren Zwischenraum (38) bilden, wobei die ersten und zweiten Scherwerkzeuge (24, 28) in dem Scherraum (16) angeordnet sind,
- wiederholtes Eingreifen lassen wenigstens eines Abschnitts eines der Vielzahl zweiter Scherwerkzeuge (28) in den Zwischenraum (34) durch das Drehantreiben der ersten und der zweiten Welle (W1, W2), wobei zwischen dem wenigstens einen Abschnitt und den beiden benachbarten, den Zwischenraum (34) bildenden ersten Scherwerkzeugen (24) in axialer Richtung jeweils ein Spalt (36) einer Breite von mindestens 0,3 mm, vorzugsweise mindestens 0,5 ausgebildet ist, zum Herauslösen von Stärke aus dem Gemisch, wobei Scherbeanspruchungen auf ein zu bearbeitendes stärke- und glutenhaltiges Gemisch aufgebracht werden, wobei die Scherbeanspruchungen bei einer Rotation der ersten und/oder der zweiten Welle (W1, W2) durch ein Zusammenwirken des wenigstens einen eingreifenden Abschnitts, der beiden benachbarten, den Zwischenraum (34) bildenden ersten Scherwerkzeuge (24) und des zwischen diesen ausgebildeten Spalts erzeugt werden.

14. Verfahren nach Anspruch 13, umfassend die weiteren Schritte:
- Zuführen eines Mediums in den Scherraum (16), und
- Ausspülen der herausgelösten Stärke aus dem Gemisch mittels des zugeführten Mediums.

## Claims

1. Shearing unit for obtaining gluten from a viscous mixture containing starch and gluten, having
a housing (10) in which a shearing chamber (16) having an inlet (18) and an outlet (20) is formed, wherein, for conveying the mixture through the shearing unit, the housing (10) is able to be connected on the inlet side to a pump device which is adapted to convey the mixture through the shearing chamber (16) of the shearing unit;
a first shaft (W1) which is rotatably mounted in the housing (10) and which has a plurality of disc-shaped first shearing tools (24) which are mounted in a rotationally fixed manner on the first shaft (W1), wherein in each case two adjacent shearing tools of the plurality of first shearing tools (24) are axially spaced apart from one another so that they form an intermediate space (34),
a second shaft (W2) which is rotatably mounted in the housing (10) and which is arranged parallel to the first shaft (W1) and has a plurality of disc-shaped second shearing tools (28) which are mounted in a rotationally fixed manner on the second shaft (W2), wherein in each case two adjacent shearing tools of the plurality of second shearing tools (28) are axially spaced apart from one another so that they form a further intermediate space (38),
wherein the first and second shearing tools (24, 28) are arranged in the shearing chamber (16),
wherein the first and second shafts (W1, W2) are radially spaced apart from one another and the plurality of first shearing tools (24) is axially offset relative to the plurality of second shearing tools (28) in such a manner that at least one portion of one of the plurality of second shearing tools (28) engages into an intermediate space (34), and
wherein a gap (36) having a width of at least 0.3 mm, preferably of at least 0.5 mm, is formed in each case in the axial direction between the at least one engaging portion and the two adjacent first shearing tools (24) forming the intermediate space (34).

2. Shearing unit according to claim 1, in which at least one portion of one of the plurality of first shearing tools (24) engages into the further intermediate space (38), and
wherein a further gap (40) having a width of at least 0.3 mm, preferably of at least 0.5 mm, is formed in each case in the axial direction between the at least one engaging portion of one of the plurality of first shearing tools (24) and the two adjacent second shearing tools (28) forming the further intermediate space (38).

3. Shearing unit according to claim 1 or 2, in which the gap (36) and/or the further gap (40) has an axial width of at least 1 mm, preferably of at least 2 mm.

4. Shearing unit according to any one of claims 1 to 3, in which the first shearing tools (24) and/or the second shearing tools (28) are star-shaped.

5. Shearing unit according to claim 4, in which a serration is formed at least in some portions on an outer circumferential surface of at least one star point (52) of the first shearing tool (24) and/or of the second shearing tool (28).

6. Shearing unit according to any one of the preceding claims, in which the plurality of first shearing tools (24) and/or the plurality of second shearing tools (28) is arranged in a rotationally fixed manner on a sleeve (22, 26), and
wherein the sleeve (22, 26) is connected in a rotationally fixed manner to the associated first and/or second shaft.

7. Shearing unit according to any one of the preceding claims, in which the plurality of first shearing tools (24) and/or the plurality of second shearing tools (28) is fastened without screws to the associated shaft within the shearing chamber (16).

8. Shearing unit according to any one of the preceding claims, which further comprises a drive device which is connected to the first shaft (W1) and to the second shaft (W2) by way of a belt drive (41),
wherein the drive device is designed to rotate the first shaft (W1) at a first rotational speed and to rotate the second shaft (W2) at a second rotational speed by means of the belt drive (41).

9. Shearing unit according to claim 8, in which the first rotational speed is different from the second rotational speed and/or in which the direction of rotation of the first shaft (W1) is different from the direction of rotation of the second shaft (W2).

10. Shearing unit according to any one of the preceding claims, which further comprises a secondary-substance feed which is adapted to supply a medium to the shearing chamber (16).

11. Shearing unit according to claim 10, in which the secondary-substance feed is a water lance which is adapted to supply water to the shearing chamber (16), wherein a feed opening of the water lance is preferably arranged in the region of the inlet (18) of the shearing chamber (16).

12. System having a shearing unit according to any one of the preceding claims and a pump device, preferably a hopper pump, connected thereto, which pump device is adapted to convey a mixture that is to be sheared through the shearing chamber (16) of the shearing unit.

13. Method for obtaining gluten from a mixture containing starch and gluten, comprising the steps:
- supplying a mixture to a shearing chamber (16) of a shearing unit, in particular of a shearing unit according to any one of claims 1 to 11,
- driving in rotation a first shaft (W1) which has a plurality of disc-shaped first shearing tools (24) which are mounted in a rotationally fixed manner on the first shaft (W1), wherein in each case two adjacent shearing tools of the plurality of first shearing tools (24) are axially spaced apart from one another so that they form an intermediate space (34),
- driving in rotation a second shaft (W2) which is arranged parallel to the first shaft (W1) and which has a plurality of disc-shaped second shearing tools (28) which are mounted in a rotationally fixed manner on the second shaft (W2), wherein in each case two adjacent shearing tools of the plurality of second shearing tools (28) are axially spaced apart from one another so that they form a further intermediate space (38), wherein the first and second shearing tools (24, 28) are arranged in the shearing chamber (16),
- repeatedly allowing at least one portion of one of the plurality of second shearing tools (28) to engage into the intermediate space (34) by driving the first and second shafts (W1, W2) in rotation, wherein a gap (36) having a width of at least 0.3 mm, preferably of at least 0.5 mm, is formed in each case in the axial direction between the at least one portion and the two adjacent first shearing tools (24) forming the intermediate space (34), in order to remove starch from the mixture, wherein shear stresses are applied to a mixture containing starch and gluten that is to be processed, wherein the shear stresses are generated on rotation of the first and/or second shaft (W1, W2) by interaction of the at least one engaging portion, the two adjacent first shearing tools (24) forming the intermediate space (34) and the gap formed between those shearing tools.

14. Method according to claim 13, comprising the further steps:
- supplying a medium to the shearing chamber (16), and
- rinsing the removed starch out of the mixture by means of the supplied medium.

## Revendications

1. Ensemble de cisaillement permettant d'obtenir du gluten à partir d'un mélange contenant de l'amidon et du gluten comprenant
un boîtier (10), dans lequel est conçu une chambre de cisaillement (16) dotée d'une entrée (18) et d'une sortie (20), dans lequel le boîtier (10) peut être raccordé à un dispositif de pompe côté entrée pour acheminer le mélange à travers l'ensemble de cisaillement, ledit dispositif de pompe est conçu pour acheminer le mélange à travers la chambre de cisaillement (16) de l'ensemble de cisaillement;
un premier arbre (W1) monté à rotation dans le boîtier (10), ledit arbre comprenant une pluralité de premiers outils de cisaillement (24) discoïdes, qui sont montés solidaires en rotation sur le premier arbre (W1), dans lequel deux outils de cisaillement respectifs adjacents parmi la pluralité des premiers outils de cisaillement (24) sont écartés axialement l'un de l'autre, de sorte qu'ils forment une chambre intermédiaire (34),
un second arbre (W2) monté à rotation dans le boîtier (10), ledit arbre étant disposé parallèlement au premier arbre (W1) et comprenant une pluralité de seconds outils de cisaillement (28) discoïdes, qui sont montés solidaires en rotation sur le second arbre (W2), dans lequel deux outils de cisaillement respectifs adjacents de la pluralité des seconds outils de cisaillement (28) sont écartés axialement l'un de l'autre, de sorte qu'ils forment une seconde chambre intermédiaire (38),
dans lequel les premiers et seconds outils de cisaillement (24, 28) sont disposés dans la chambre de cisaillement (16),
dans lequel le premier et le second arbre (W1, W2) sont écartés radialement l'un de l'autre et la pluralité des premiers outils de cisaillement (24) est décalée axialement par rapport à la pluralité des seconds outils de cisaillement (28) de telle sorte qu'au moins une section d'un outil de cisaillement de la pluralité des seconds outils de cisaillement (28) vient en prise dans une chambre intermédiaire (34), et
dans lequel entre l'au moins une section venant en prise et les deux premiers outils de cisaillement (24) adjacents formant la chambre intermédiaire (34) se forme dans la direction axiale respectivement un espace (36) d'une largeur d'au moins 0,3 mm, de préférence d'au moins 0,5 mm.

2. Ensemble de cisaillement selon la revendication 1, dans lequel l'au moins une section d'un parmi la pluralité des premiers outils de cisaillement (24) vient en prise dans l'autre chambre intermédiaire (38), et
dans lequel entre l'au moins une section venant en prise d'un outil de cisaillement de la pluralité des premiers outils de cisaillement (28) et les deux outils de cisaillement (28) adjacents formant la chambre intermédiaire (38) se forme dans la direction axiale respectivement un autre espace (40) d'une largeur d'au moins 0,3 mm, de préférence d'au moins 0,5 mm.

3. Ensemble de cisaillement selon la revendication 1 ou 2, dans lequel l'espace (36) et/ou l'autre espace (40) présente une largeur axiale d'au moins 1 mm, de préférence d'au moins 2 mm.

4. Ensemble de cisaillement selon l'une quelconque des revendications 1 à 3, dans lequel les premiers outils de cisaillement (24) et/ou les seconds outils de cisaillement (28) se présentent sous la forme d'une étoile.

5. Ensemble de cisaillement selon la revendication 4, dans lequel sur une surface circonférentielle extérieure d'au moins une branche d'étoile (52) du premier outil de cisaillement (24) et/ou du second outil de cisaillement (28) est formée une denture au moins à certains endroits.

6. Ensemble de cisaillement selon l'une quelconque des revendications précédentes, dans lequel la pluralité des premiers outils de cisaillement (24) et/ou la pluralité des seconds outils de cisaillement (28) sont disposés solidaires en rotation sur un manchon (22, 26), et
dans lequel le manchon (22, 26) est relié solidaire en rotation au premier et/ou au second arbre correspondant.

7. Ensemble de cisaillement selon l'une quelconque des revendications précédentes, dans lequel la pluralité des premiers outils de cisaillement (24) et/ou la pluralité des seconds outils de cisaillement (28) est fixée sans vis sur l'arbre correspondant à l'intérieur de la chambre de cisaillement (16).

8. Ensemble de cisaillement selon l'une quelconque des revendications précédentes, qui comprend en outre un dispositif d'entraînement qui est relié par un dispositif d'entraînement par courroie (41) au premier arbre (W1) et au second arbre (W2),
dans lequel le dispositif d'entraînement est conçu, au moyen du dispositif d'entraînement par courroie (41), pour faire tourner le premier arbre (W1) à une première vitesse et pour faire tourner le second arbre (W2) à une seconde vitesse.

9. Ensemble de cisaillement selon la revendication 8, dans lequel la première vitesse est différente de la seconde vitesse et/ou dans lequel le sens de rotation du premier arbre (W1) est différent du sens de rotation du second arbre (W2).

10. Ensemble de cisaillement selon l'une quelconque des revendications précédentes, qui comprend en outre une entrée secondaire qui est conçue pour acheminer un milieu dans la chambre de cisaillement (16).

11. Ensemble de cisaillement selon la revendication 10, dans lequel l'entrée secondaire est une lance à eau, qui est conçue pour acheminer l'eau dans la chambre de cisaillement (16), dans lequel une ouverture d'acheminement de la lance à eau est disposée de préférence dans la zone de l'entrée (18) de la chambre de cisaillement (16).

12. Système comprenant un ensemble de cisaillement selon l'une quelconque des revendications précédentes et un dispositif de pompe raccordé à ce dernier, de préférence, une pompe à trémie qui est conçue pour acheminer le mélange à cisailler à travers la chambre de cisaillement (16) de l'ensemble de cisaillement.

13. Procédé permettant d'obtenir du gluten à partir d'un mélange contenant de l'amidon et du gluten, comprenant les étapes:
l'acheminement d'un mélange dans une chambre de cisaillement (16) d'un ensemble de cisaillement, en particulier d'un ensemble de cisaillement selon l'une des revendications 1 à 11,
l'entraînement par rotation d'un premier arbre (W1) qui comprend une pluralité de premiers outils de cisaillement (24) discoïdes, qui sont montés solidaires en rotation sur le premier arbre (W1), dans lequel deux outils de cisaillement respectifs adjacents parmi la pluralité des premiers outils de cisaillement (24) sont écartés axialement l'un de l'autre, de sorte qu'ils forment une chambre intermédiaire (34),
l'entraînement par rotation d'un second arbre (W2) qui est disposé parallèlement au premier arbre (W1) et comprenant une pluralité de seconds outils de cisaillement (28) discoïdes, qui sont montés solidaires en rotation sur le second arbre (W2), dans lequel deux outils de cisaillement respectifs adjacents parmi la pluralité des seconds outils de cisaillement (28) sont écartés axialement l'un de l'autre, de sorte qu'ils forment une seconde chambre intermédiaire (38), les premiers et les seconds outils de cisaillement (24, 28) sont disposés dans la chambre de cisaillement (16),
la mise en prise répétée d'au moins une section d'un outil de cisaillement de la pluralité des seconds outils de cisaillement (28) dans la chambre intermédiaire (34) par l'entraînement en rotation du premier et du second arbre (W1, W2), entre l'au moins une section et les deux outils de cisaillement (24) adjacents formant la chambre intermédiaire (34) dans la direction axiale se forme respectivement un espace (36) d'une largeur d'au moins 0,3 mm, de préférence d'au moins 0,5, pour retirer l'amidon du mélange, les contraintes de cisaillement étant appliquées à un mélange contenant de l'amidon et du gluten devant être traité, les contraintes de cisaillement lors d'une rotation du premier et/ou du second arbre (W1, W2) sont générées par une interaction de l'au moins une section mise en prise, des deux premiers outils de cisaillement (24) adjacents formant la chambre intermédiaire (34) et l'espace formé entre eux.

14. Procédé selon la revendication 13, comprenant les étapes suivantes:
l'acheminement d'un milieu dans la chambre de cisaillement (16), et
le rinçage de l'amidon retiré du mélange au moyen du milieu acheminé.
